# EUROPÄISCHE PATENTSCHRIFT

(11) **EP 3 207 788 B1**
(45) Veröffentlichungstag und Bekanntmachung des Hinweises auf die Patenterteilung: **04.12.2019**
(21) Anmeldenummer: 16202239.6
(22) Anmeldetag: 05.12.2016
(51) Int. Cl.: A01F 12/44

(54) **REINIGUNGSEINRICHTUNG**
CLEANING DEVICE
DISPOSITIF DE NETTOYAGE

(30) Priorität: 22.02.2016 DE 102016103026
(43) Veröffentlichungstag der Anmeldung: 23.08.2017
(73) Patentinhaber: CLAAS Selbstfahrende Erntemaschinen GmbH, 33428 Harsewinkel (DE)
(72) Erfinder: Lehmberg, Andreas, 33428 Harsewinkel (DE); Holtmann, Bernd, 48324 Sendenhorst (DE); Schürmann, Ludger, 48488 Emsbüren (DE)
(74) Vertreter: CLAAS Gruppe

(56) Entgegenhaltungen:
- EP-A1- 2 848 113
- DE-A1- 3 230 965
- GB-A- 1 144 621
- US-A- 3 664 349

## Beschreibung

Die vorliegende Erfindung betrifft eine Reinigungseinrichtung für einen Mähdrescher gemäß dem Oberbegriff des Anspruches 1 sowie einen Mähdrescher gemäß Anspruch 11.

Der Reinigungseinrichtung eines Mähdreschers kommt die Aufgabe zu, im Anschluss an einen Dresch- und Abscheideprozess Korn von Nichtkornbestandteilen wie Kurzstroh, Spreu und dergleichen zu trennen. Hierzu gelangen das Korn und die Nichtkornbestandteile als ein gemeinsamer Erntegutstrom auf eine ein Obersieb und ein Untersieb umfassende Siebanordnung. Die Siebanordnung ist oszillierend angetrieben, wobei die Schwingungsbewegung der Förderung und Auflockerung des Erntegutes auf den Sieben dient. Zusätzlich umfasst die Reinigungseinrichtung ein Gebläse, welches einen Luftstrom bereitstellt, der von schräg unten in Richtung auf die Unterseite des Obersiebes und des Untersiebes gelenkt wird, und die leichten Nichtkornbestandteile aus der Reinigungseinrichtung in Richtung Heck des Mähdreschers austrägt. Der die Reinigungseinrichtung passierende Erntegutstrom durchläuft in der Reinigungseinrichtung drei Phasen. Im Einlaufbereich der Reinigungseinrichtung, das heißt in unmittelbare Nähe zum Gebläse, befindet sich der Erntegutstrom in der so genannten Flugphase. In der Flugphase wird im Wesentlichen eine schwerkraftbedingte Entmischung im Gutstrom selbst bewirkt. Daran schließt sich die eigentliche, die Kornabscheidung bewirkende sogenannte Wirbelschichtphase an. Dabei bildet sich auf dem Sieb eine aufgelockerte, fluidisierte Schüttschicht, in der die Kohärenz der einzelnen Partikel aufgehoben ist und die Körner in kurzer Zeit auf das Sieb absinken und durch die Sieböffnungen hindurchtreten können. Die Wirbelschichtphase sollte möglichst lang sein, da die Entmischung während der Wirbelschichtphase am effektivsten ist. Im rückwärtigen Bereich der Reinigungseinrichtung geht die Gutschicht unter anderem wegen des fehlenden Luftstroms in die sogenannte Schüttphase über, in der das Gutgemisch - nun überwiegend Nichtkornbestandteile - nur noch durch die Schwingbewegung der Siebe selbst entmischt wird. Diese Phase sollte wegen ihrer ineffizienteren Entmischung möglichst kurz sein.

Aus der EP 2 848 113 A1 ist eine Reinigungseinrichtung der eingangs genannten Art bekannt. Ein von einem Gebläse bereitgestellter Luftstrom tritt aus einem ersten Gebläseauslass aus, der zum Teil durch einen dem Untersieb vorgelagerten Rost nach hinten und oben strömt. Der übrige Teil des Luftstromes gelangt durch zwei unterhalb des Untersiebes angeordnete Luftleitbleche an die Unterseite des Untersiebes und durchströmt dieses. Der durch den Rost und das Untersieb hindurchtretende Luftstrom gelangt an die Unterseite des Obersiebes. Die Luftleitbleche weisen einen mandelförmigen Querschnitt auf, dessen Außenseiten in scharfkantige Abschnitte münden. Aus einem beabstandet zu dem ersten Gebläseauslass angeordneten zweiter Gebläseauslass tritt ein weiterer Teilluftstrom aus, welcher ein Vorreinigungssieb und das in einer etwas darunter liegenden Ebene nachgeordnete Obersieb umströmt. Die Durchströmung von Obersieb und Untersieb nimmt dabei in Längs- beziehungsweise Förderrichtung der Siebe signifikant ab. Die Positionierung und Gestalt der Luftleitbleche unterhalb des Untersiebes ist so beschaffen, dass die steil stehenden Luftleitbleche mit ihrer dem Luftstrom zugewandten Oberfläche diesen im Wesentlichen nach oben hin ablenken, so dass die Durchströmung von Unter- und Obersieb im Bereich hinter dem Luftleitblech in Gutaustragrichtung abnimmt. Hierzu trägt insbesondere die Krümmung des der Unterseite des Untersiebes zugewandten scharfkantigen Abschnitts des Luftleitblechs bei, welche den Luftstrom parallel zur der Siebunterseite ablenkt, so dass dieser für die Durchströmung der Siebe nicht mehr zur Verfügung steht.

Aus der DE 1 607 633 A1 ist eine Reinigungseinrichtung gemäß dem Oberbegriff des Anspruches 1 bekannt.

Aufgabe der vorliegenden Erfindung ist es, die Durchströmung von Obersieb und Untersieb im hinteren Siebbereich dahingehend zu verbessern, dass eine Ausdehnung der Wirbelschichtphase in Austragrichtung der Siebe erreicht wird.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird eine Reinigungseinrichtung für einen Mähdrescher vorgeschlagen, die wenigstens ein Gebläse, einen oszillierend angetriebenen Siebrahmen, der zumindest ein Obersieb und ein Untersieb aufweist, die beabstandet zueinander in dem Siebrahmen angeordnet sind, sowie zumindest einen Kanalabschnitt, der einen von dem wenigstens Gebläse bereitgestellten Luftstrom von schräg unten in Richtung auf die Unterseite des Obersiebes und des Untersiebes lenkt, umfasst und dadurch gekennzeichnet ist, dass unterhalb des Untersiebes und des Obersiebes jeweils zumindest Luftleitelement angeordnet ist, welches einander gegenüberliegende, von spitz zulaufenden Bereichen freie Stirnflächen und zumindest eine diese miteinander verbindende Seitenfläche aufweist, die bezogen auf den Querschnittsmittelpunkt des Luftleitelementes unterschiedliche Krümmungsradien aufweisen, wobei die Krümmungsradien der Stirnflächen kleiner sind, als der Krümmungsradius der zumindest einen Seitenfläche. Dabei können die Krümmungsradien der Stirnflächen gleich groß sein. Alternativ kann der Krümmungsradius der der Luftströmung zugewandten Stirnfläche größer sein, als der Krümmungsradius der der Luftströmung abgewandten Stirnfläche. Aus der besonderen Querschnittsform der Luftleitelemente resultiert der Effekt, dass der von dem Gebläse erzeugte Luftstrom das jeweilige Luftleitelement beidseitig umströmt, wobei der Luftstrom durch das jeweilige Luftleitelement untenseitig eine andere Ablenkung erfährt als obenseitig. Der untenseitig abgelenkte Luftstrom trifft erst in einem weiter in Gutaustragrichtung, das heißt in Längsrichtung der Siebe, liegenden Bereich auf das Unter- beziehungsweise Obersieb. Die Durchströmung von Unter- und Obersieb wird in Gutaustragrichtung verbessert, so dass die Wirbelschichtphase über eine längere Wegstrecke in Gutaustragrichtung aufrechterhalten werden kann. Die Querschnittsform der Luftleitelemente leitet die siebparallele Luftströmung um, wodurch sich die lokale vertikale Siebdurchströmung von Unter- und Obersieb erhöht. Des Weiteren können durch die besondere Querschnittsform der Luftleitelemente Windschatteneffekte und Strömungsablösungen gering gehalten werden. Durch die verbesserte Anströmung der Sieblamellen kann die Reinigungswirkung, das heißt der Grad der Kornverunreinigung des von der Reinigungseinrichtung abgeschiedenen Korns durch Spreu oder Kurzstroh, sowie die Abscheidequalität verbessert werden. Weiterhin tritt keine beziehungsweise nur eine geringe Ablösung hinter dem Luftleitelement auf, das heißt nahezu kein Windschatten hinter dem Luftleitelement. Daher werden auch alle Sieblamellen von Unter- und Obersieb über dem jeweiligen Luftleitelement durchströmt.

Besonders vorteilhaft ist es, wenn die Länge zumindest des Obersiebes in Abhängigkeit von der Anzahl an darunter angeordneten Leitelementen verlängerbar ist. Hierbei kann ein zusätzlich montierbarer Siebabschnitt an dem Ende des Obersiebes angeordnet werden. Alternativ kann das Obersieb gegen ein längeres Obersieb ausgetauscht werden. Durch die Ausdehnung der Wirbelschichtphase in Gutaustragrichtung wegen der verbesserten Durchströmung im hinteren Teil von Ober- und Untersieb, lässt sich der Effekt der erhöhten Abscheidung auf der zweiten Siebhälfte des Obersiebes dadurch steigern, dass eine zusätzlich Abscheidefläche zur Verfügung gestellt wird. Hierdurch kann der vorhandene Bauraum besser ausgenutzt werden, da eine reine Siebverlängerung ohne zusätzliche Maßnahmen, die eine Ausdehnung der Wirbelschichtphase in Austragrichtung bewirken, ohne nennenswerten Effekt bliebe. Dies kann in analoger Weise auch für das Untersieb gelten.

Vorteilhafterweise kann das jeweilige Luftleitelement einen im Wesentlichen ellipsenförmigen, von spitz zulaufenden Bereichen freien Querschnitt aufweisen. Das so geformte Luftleitelement wird angeströmt, wobei sich aufgrund des Staudrucks ein Staupunkt vor der Stirnfläche des Luftleitelementes ausbildet. Die Luftströmung teilt sich in diesem Staupunkt auf, so dass ein Teil der Luftströmung über das Luftleitelement strömen kann, während der andere Teil unter dem Luftleitelement entlang strömt. Dies führt zu einer Vergleichmäßigung der Luftströmung sowie zu einer Reduzierung der Verwirbelung unterhalb von Untersieb und Obersieb.

Bevorzugt können unter dem Untersieb und dem Obersieb jeweils wenigstens zwei Luftleitelemente angeordnet sein, die in Gutaustragrichtung gesehen versetzt zueinander angeordnet sind. Insbesondere kann ein Anteil der Anströmung eines ersten Luftleitelementes weiter stromabwärts siebparallel geleitet werden um einem nachfolgenden Luftleitelement die Luftströmung anteilig bereitzustellen.

Dabei können die Luftleitelemente in einer zur jeweiligen Siebebene parallelen Ebene angeordnet sein. Die Luftleitelemente können jeweils als ein sich im Wesentlichen über die Breite des Unter- und Obersiebes ersteckendes Bauteil ausgeführt sein. Denkbar ist auch eine segmentierte Ausgestaltung der einzelnen Luftleitelemente. Bei einer segmentierten Ausgestaltung können die Luftleitelemente über ihre Erstreckung der Breite des Unter- und Obersiebes unterschiedlich Querschnittsformen aufweisen.

Insbesondere kann die Anordnung der Luftleitelemente zueinander derart gewählt sein, dass gedachte Verbindungslinien, welche die Längsachsen der Luftleitelemente miteinander verbinden, eine Art Parallelogramm aufspannen.

Eine Hauptachse des jeweiligen Luftleitelementes weist eine Neigung zur jeweiligen Siebebene von Ober- und Untersieb auf. Entsprechend der Neigung des Luftleitelementes variiert das An- und Umströmungsverhalten. So lässt sich der Anteil der Luftströmung, der auf der dem jeweiligen Sieb abgewandten Seite des Luftleitelementes in einen in Gutaustragrichtung weiter hinten liegenden Bereich umgelenkt wird, durch eine Neigungsänderung der Hauptachse variieren.

Die Neigung der jeweiligen Hauptachse ist einstellbar. Eine, insbesondere individuelle, Einstellbarkeit der Neigung der Luftleitelemente hat den Vorteil, dass eine Anpassung an die unterschiedlichen Betriebsbedingungen ermöglicht wird. So lassen sich Parameter wie die Strömungsgeschwindigkeit des von dem Gebläse bereitgestellten Luftstroms sowie Änderungen der Sieböffnungsweiten einzeln oder in Kombination miteinander berücksichtigen. Diese Anpassung der Betriebsparameter hängt wiederum von den Ernteguteigenschaften sowie den Erntebedingungen ab, unter denen die Reinigungseinrichtung betrieben wird. Hierzu kann den Leitelementen eine Aktorik zugeordnet sein, die ein Verstellen der Leitelemente ermöglicht. Die Aktorik kann als einzelmotorische Antriebe ausgebildet sein, die jedem Leitelement zugeordnet sind. Alternativ kann die Aktorik als eine Hebelanordnung ausgeführt sein, welche jeweils eine Verstellung eines Paares von Leitelementen erlaubt.

Des Weiteren kann der jeweilige Abstand der Luftleitelemente zu dem Untersieb und/oder Obersieb in vertikaler Richtung variierbar sein. Hierzu kann beispielsweise eine Art Kulissenführung vorgesehen sein, innerhalb der das jeweilige Luftleitelement endseitig geführt ist. Die Kulissenführung kann beispielsweise in den Siebkasten integriert sein.

Darüber hinaus kann der jeweilige Abstand der Luftleitelemente zu dem Untersieb und/oder Obersieb in horizontaler Richtung variierbar sein. Auf diese Weise können sich ändernde Betriebsbedingungen der Reinigungseinrichtung Berücksichtigung finden, beispielsweise eine Änderung der Neigung der Reinigungseinrichtung in deren Längsrichtung.

Vorteilhafterweise können die Luftleitelemente als Hohlprofile ausgeführt sein. Hierdurch lässt sich eine Gewichtreduktion erreichen. Denkbar ist auch eine Ausgestaltung des Leitelementes mit einem zu einer Seite hin offenen Profil, wobei die offene Seitenfläche sich auf der dem jeweiligen Sieb abgewandten Seite befindet. Hierdurch ließen sich die Herstellkosten reduzieren.

Weiterhin betrifft die Erfindung einen Mähdrescher mit einer Reinigungseinrichtung, welche ein Gebläse, einen oszillierend angetriebenen Siebrahmen, der zumindest ein Obersieb und ein Untersieb aufweist, die beabstandet zueinander in dem Siebrahmen angeordnet sind, sowie einen Kanal, der einen von dem Gebläse bereitgestellten Luftstrom von schräg unten in Richtung auf die Unterseite des Obersiebes und des Untersiebes lenkt, aufweist, welcher dadurch gekennzeichnet ist, dass eine Steuerungseinrichtung zur Ansteuerung einer Aktorik zur Verstellung von Leitelementen einer Reinigungseinrichtung nach einem der Ansprüche 1 bis 10 vorgesehen ist. Mittels der Steuerungseinrichtung können die Luftleitelemente individuell angesteuert werden. Hierdurch kann die Neigung einzelner Luftleitelemente verändert werden. Ebenfalls kann die Position einzelner Luftleitelemente in vertikaler und/oder horizontaler Richtung geändert werden.

Die vorliegende Erfindung wird nachstehend anhand eines in den Zeichnungen dargestellten Ausführungsbeispiels näher erläutert.

Es zeigen:
- Fig. 1: eine schematische Seitenansicht eines Mähdreschers;
- Fig. 2: eine schematische Seitenansicht der Reinigungseinrichtung 4, eines Vorbereitungsbodens 12 und eines Rücklaufbodens gemäß Fig. 1;
- Fig. 3: eine Querschnittansicht durch ein Luftleitelement;
- Fig. 4: eine Schnittansicht eines Luftleitelementes gemäß Fig. 3 mit einer veranschaulichten Umströmung durch einen Luftstrom;
- Fig. 5: eine Querschnittsansicht einer zweiten Ausführungsform eines Luftleitelementes.

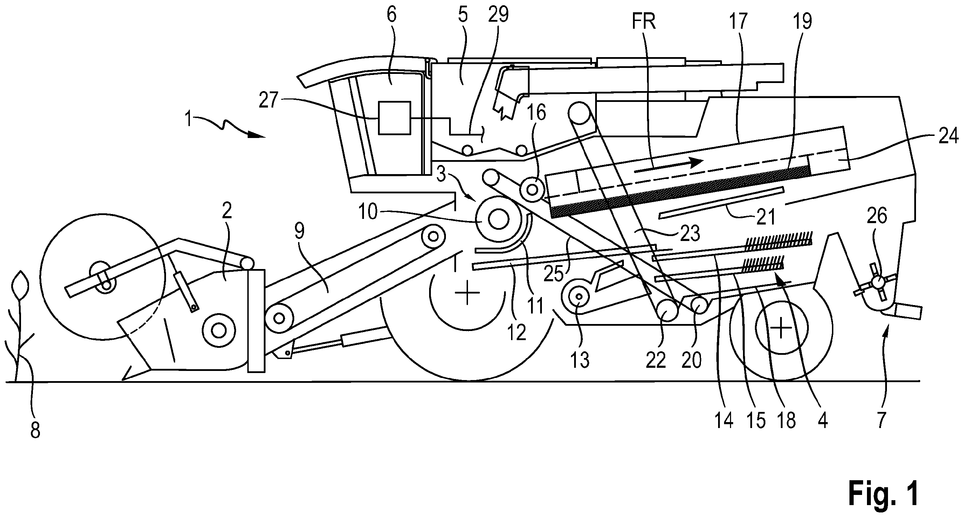

Die Darstellung in Fig. 1 zeigt eine schematische Längsschnittdarstellung eines Mähdreschers 1. Der Mähdrescher 1 trägt in seinem Frontbereich ein höhenverstellbares Schneidwerk 2, welches gewachsenes Erntegut 8 auf großer Breite aberntet, in seitlicher Richtung zusammenführt und an ein Schrägförderorgan 9 übergibt. Durch das Schrägförderorgan 9 gelangt das Erntegut 8 zu Dreschorganen 3, die in der Regel als Mehrtrommeldreschwerke ausgeführt sind. Die Dreschorgane 3 gemäß der Darstellung in der Fig. 1 umfassen eine Dreschtrommel 10, eine dieser nachgeordnete Wendetrommel 16 und einen die Dreschtrommel 10 abschnittsweise umgebenden Dreschkorb 11. Durch Öffnungen des Dreschkorbs 11 hindurch wird aus dem Erntegut 8 ein im Wesentlichen aus einem Gemisch aus Körnern, Kurzstroh und Spreu bestehender Erntegutstrom abgeschieden, der auf einen Vorbereitungsboden 12 fällt. Durch Rüttelbewegungen des oszillierend angetriebenen Vorbereitungsbodens 12 wird das Erntegut darauf nach hinten in Richtung einer Reinigungseinrichtung 4 gefördert.

Der nicht durch den Dreschkorb 11 hindurch getretene Teil des Erntegutstroms wird von der Wendetrommel 16 zu einer als Axialrotor 17 ausgeführten, sich in Längsrichtung des Mähdreschers 1 erstreckenden Abscheidevorrichtung weiterbefördert. Der Axialrotor 17 ist in seinem unteren Bereich von einem halbzylindrischen Sieb 19 umgeben, durch das ein im Wesentlichen aus einem Gemisch aus Körnern und Ährenbruchstücken bestehender Erntegutstrom abgeschieden wird, der auf einen unterhalb des Siebs 19 angeordneten Rücklaufboden 21 gelangt. Erntegut, im Wesentlichen Stroh, welches am rückwärtigen Ende 24 des Axialrotors 17 ausgeworfen wird, gelangt zu einer Verteilvorrichtung 7 am Heck des Mähdreschers 1, wo es von einem Häcksler 26 zerkleinert und schließlich auf den Boden eines Feldes ausgebracht wird.

Auf dem rüttelnd bewegten Rücklaufboden 21 wird das durch das Sieb 19 der Abscheidevorrichtung abgegebene Erntegut vorwärts in Richtung der Dreschorgane 3 gefördert und an die Reinigungseinrichtung 4 übergeben, wo sich der Erntegutstrom des Rücklaufbodens 21 mit dem durch den Dreschkorb 11 hindurch getretenen Erntegutstrom vereinigt, der von dem Vorbereitungsboden 12 an die Reinigungseinrichtung 4 abgegeben wird.

Die Reinigungseinrichtung 4 umfasst ein Obersieb 14, ein Untersieb 15 und ein Reinigungsgebläse 13, welches einen durch und über die Siebe 14, 15 streichenden Luftstrom erzeugt. Das in den vom Vorbereitungsboden 12 beziehungsweise vom Rücklaufboden 21 kommenden Erntegutströmen enthaltene Korn passiert nacheinander das Obersieb 14 sowie das Untersiebe 15 und erreicht über einen darunter liegenden Boden 18 eine Schneckenfördereinrichtung 22 und einen Kornelevator 23, der es in einen im rückwärtigen Bereich der Fahrerkabine 6 angeordneten Korntank 5 fördert.

Anteile des Erntegutstroms, die leichter als das Korn sind, werden beim Herabfallen vom Vorbereitungsboden 12 auf das Obersieb 14, vom Obersieb 14 auf das Untersieb 15 oder vom Untersieb 15 auf den Boden 18 von dem Luftstrom des Reinigungsgebläses 13 erfasst und mitgerissen, erreichen den Verteiler 7 und werden über diesen ausgeschieden. Schwere, gröbere Anteile des Erntegutstromes, wie unausgedroschene Ährenspitzen, gelangen mittels einer Überkehr am rückwärtigen Ende der Siebe 14, 15 in einen unterhalb der Siebe 14, 15 quer verlaufenden Graben. Eine in dem Graben rotierende Schnecke 20 räumt das Material seitwärts zu einem Überkehrelevator 25, der es zurück zu den Dreschorganen 3 befördert.

Des Weiteren umfasst der Mähdrescher 1 eine Steuerungseinrichtung 27, welche der Ansteuerung eines oder mehrerer Arbeitsorgane einschließlich deren Aktoren, wie dem Schneidwerk 2, den Dreschorganen 3, der Reinigungseinrichtung 4 oder der Abscheidevorrichtung dient. Hierzu ist die Steuerungseinrichtung durch eine Signal- und Steuerleitung 29 mit dem anzusteuernden Arbeitsorgan beziehungsweise dessen Aktorik verbunden.

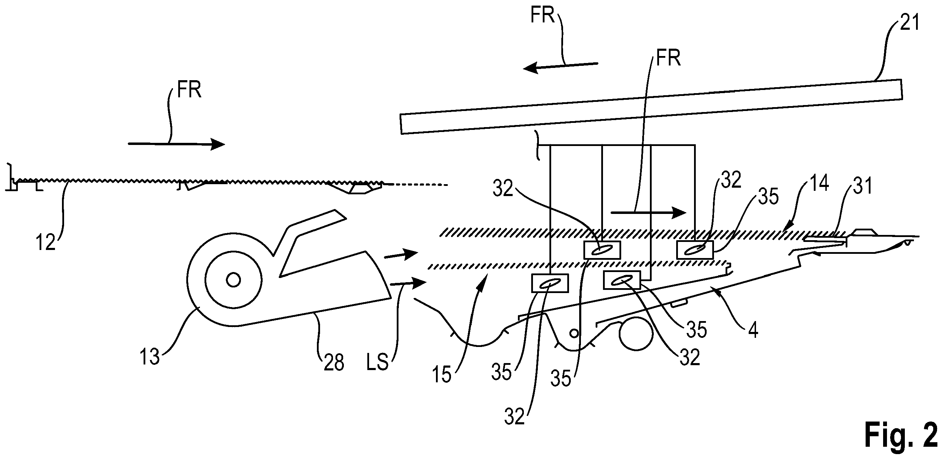

Die Darstellung in Fig. 2 zeigt eine schematische Seitenansicht der Reinigungseinrichtung 4 sowie des Vorbereitungsbodens 12 und des Rücklaufbodens 21. Mit dem Bezugszeichen FR bezeichnete Pfeile beschreiben die Förderrichtung des jeweiligen Arbeitsorganes des Mähdreschers 1. Wie bereits weiter oben ausgeführt gelangt das Erntegut von dem Rücklaufboden 21 auf den Vorbereitungsboden 12, welcher das aus Korn und Nichtkornbestandteilen bestehende Erntegut an die Reinigungseinrichtung abgibt. Dabei legt das Erntegut eine im Wesentlichen vertikale Distanz, die so genannte Fallstufe, zwischen dem Vorbereitungsboden 12 und dem Obersieb 14 im freien Fall zurück. Unterhalb des Vorbereitungsbodens 12 ist das Reinigungsgebläse 13 angeordnet, welches durch einen ersten Kanalabschnitt 28 und einen zweiten Kanalabschnitt 30 einen Luftstrom in Richtung der Siebe 14, 15 abgibt. Während des freien Falls wird das Erntegut mit einem aus dem zweiten Kanalabschnitt 30 austretenden Luftstrom beaufschlagt. Der unterhalb des Vorbereitungssiebes 12 und oberhalb des Obersiebes 14 aus dem zweiten Kanalabschnitt 30 austretende Luftstrom trägt dazu bei, Nichtkornbestandteile bereits während des freien Falls von dem Korn zu trennen und in Erntegutaustragrichtung abzufördern. Zugleich werden das Untersieb 15 und das Obersieb 14 durch einen aus dem ersten Kanalabschnitt 28 austretenden Luftstrom von unter her um- und durchströmt. Im Einlaufbereich der Reinigungseinrichtung 4 befindet sich der Erntegutstrom in der so genannten Flugphase. An die Flugphase schließt sich die eigentliche, die Kornabscheidung bewirkende sogenannte Wirbelschichtphase an. Da die Wirbelschichtphase die effizienteste Phase der Abscheidung des Korns von Nichtkornbestandteilen ist, soll diese in Austragrichtung der Reinigungseinrichtung 4 gesehen möglichst ausgedehnt sein.

Hierzu sind, wie in Fig. 2 dargestellt, unterhalb des Obersiebes 14 und des Untersiebes 15 jeweils zwei Luftleitelemente 32 angeordnet. Die Anzahl der Luftleitelemente 32 variiert insbesondere mit Blick auf die Länge von Obersieb 14 und Untersieb 15. So ist jeweils zumindest ein Luftleitelement 32 unterhalb des Obersiebes 14 und des Untersiebes 15 vorgesehen. Hiervon abweichend kann auch eine höhere Anzahl als zwei Luftleitelemente 32 angeordnet werden. Weiterhin kann die Gesamtzahl der vorgesehenen Luftleitelemente 32 unter dem jeweiligen Sieb 14, 15 voneinander abweichen. Die Luftleitelemente 32 sind in Austragrichtung gesehen, in einem Bereich hinter dem ersten Drittel des Obersiebes 14 beziehungsweise Untersiebes 15 angeordnet. Die Luftleitelemente 32 erstrecken sich im Wesentlichen über die Breite des Obersiebes 14 beziehungsweise des Untersiebes 15. Die Luftleitelemente 32 weisen einen im Wesentlich ellipsenförmigen Querschnitt auf, der frei von spitz zulaufenden Bereichen. Weiterhin zeigt die Darstellung in Fig. 2 eine Siebverlängerung 31, welche endseitig des Obersiebes 14 anbringbar ist. Vorzugsweise sind die Luftleitelemente 32 als in Umfangsrichtung geschlossene Hohlprofile ausgeführt. Die Anordnung der Luftleitelemente 32 zueinander ist derart gewählt, dass gedachte Verbindungslinien, welche Querschnittsmittelpunkte M der Luftleitelemente 32 miteinander verbinden, ein Parallelogramm aufspannen.

Weiterhin ist in Fig. 2 eine mit dem Bezugszeichen 35 bezeichnete Aktorik dargestellt, welche der Verstellung der Luftleitelemente 32 dient. Die Aktorik 35 steht mittels der Signal- und Steuerleitung 29 mit der Steuerungseinrichtung 27 in Verbindung. Die Aktorik 35 ist in dem dargestellten Ausführungsbeispiel als jeweils als einzelmotorischer Antrieb ausgeführt sein, welcher jeweils einem Luftleitelement 32 zugeordnet ist. Somit ist eine individuelle Ansteuerung der Luftleitelement 32 möglich. Die Ansteuerung der Luftleitelemente 32 durch die Steuerungseinrichtung 27 erfolgt in Abhängigkeit von Erntegut- und/oder Betriebsparametern. Unter Erntegutparametern sind neben der Erntegutart auch Parameter wie Feuchtigkeit des Erntegutes oder dergleichen zu verstehen, die den Vorgang der Reinigung beeinflussen können. Unter Betriebsparametern des Mähdreschers sind die Parameter zu verstehen, die sich während des laufenden Erntebetriebes einstellen. Diese können sich fortlaufend ändern, wobei in Abhängigkeit von der Größenordnung der Änderung eine durch die Steuerungseinrichtung 27 ansteuerbare Anpassung der Neigung und Position der Luftleitelemente 32 durchführbar ist. Alternativ kann die Aktorik zur Verstellung der Neigung der Hauptachsen HA der Luftleitelemente 32 als eine Hebelanordnung ausgeführt sein, welche jeweils eine Verstellung eines Paares von Leitelementen 32 erlaubt. Des Weiteren kann der jeweilige Abstand der Luftleitelemente 32 zu dem Untersieb 15 und/oder Obersieb 14 in vertikaler Richtung variierbar sein. Hierzu kann beispielsweise eine Art Kulissenführung vorgesehen sein, innerhalb der das jeweilige Luftleitelement 32 endseitig geführt ist. Die Kulissenführung kann hierzu beispielsweise in den das Untersieb 15 und das Obersieb 14 aufnehmenden Siebkasten integriert sein.

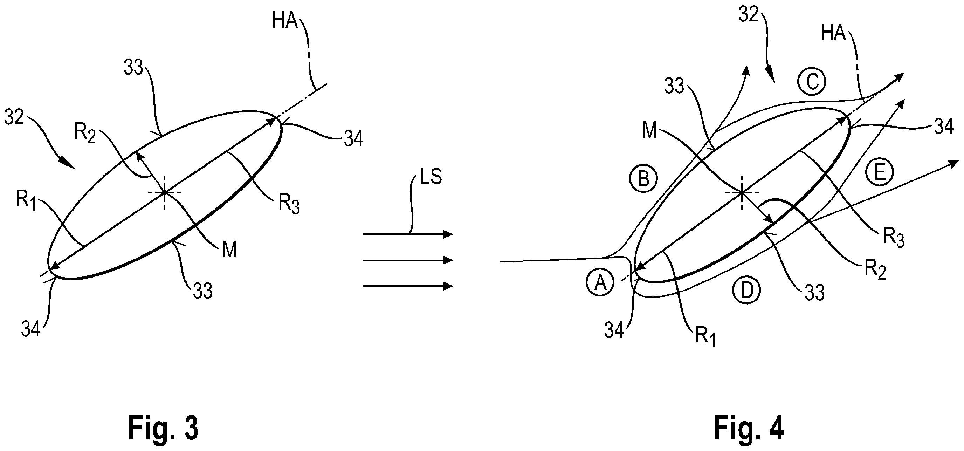

In Fig. 3 ist eine Querschnittansicht durch ein Luftleitelement 32 dargestellt. Das jeweilige Luftleitelement 32 weist einander gegenüberliegende, von spitz zulaufenden Bereichen freie Stirnflächen 34 und zumindest eine die Stirnflächen 34 miteinander verbindende Seitenfläche 33 auf. Die Stirnflächen 34 beziehungsweise Seitenflächen 33 weisen bezogen auf den Querschnittsmittelpunkt M des Luftleitelementes 32 unterschiedliche Krümmungsradien R₁, R₂, R₃ auf, wobei die Krümmungsradien R₁, R₃ der Stirnflächen 34 größer sind, als der Krümmungsradius R₂ der zumindest einen Seitenfläche 33. Eine durch den Querschnittsmittelunkt M verlaufende Hauptachse HA weist, wie bereits in Fig. 2 dargestellt, eine Neigung zu der jeweiligen Oberfläche des Obersiebes 14 beziehungsweise Untersiebes 15 auf.

Fig. 4 zeigt eine Schnittansicht eines Luftleitelementes 32 gemäß Fig. 3 mit einer veranschaulichten Umströmung durch einen Luftstrom LS. Zur besseren Veranschaulichung des von dem jeweiligen Leitelement 32 hervorgerufenen Strömungsverhaltens unterhalb von Obersieb 14 und Untersieb 15, mit welchem das jeweilige Luftleitelement 32 den Luftstrom LS beeinflusst, ist eine einzelne Strömungslinie des Luftstromes dargestellt, welche das Luftleitelement 32 umströmt. Zur Erläuterung des Wirkprinzips ist das umströmte Luftleitelement in einzelne Sektoren unterteilt, in welchen aufgrund der besonderen Geometrie des Luftleitelementes 32 sich unterschiedliche Strömungsverhalten ausbilden.

In einem ersten, vor dem Luftleitelement 32 liegenden Bereich A bildet sich aufgrund des Staudrucks ein Staupunkt beziehungsweise Staubereich vor der Stirnfläche34 aus. In diesem Staupunkt oder Staubereich kann sich die Luftströmung LS derart aufteilen, dass ein Teil der Luftströmung LS das Luftleitelement 32 oberhalb und der andere Teil der Luftströmung LS dieses unterhalb umströmt. In einem zweiten Bereich B, der auf der dem jeweiligen Sieb 14, 15 zugewandten Seite des Luftleitelementes 32 liegt, wird die das Luftleitelement 32 überströmende Luftströmung LS teilweise in eine im Wesentlichen vertikale Richtung umgeleitet, so dass das jeweilige Sieb 14, 15 von unten her mit einer Siebdurchströmung beaufschlagt wird. In einem dritten Bereich C, dem oberen Abströmbereich, legt sich ein Teil der das Luftleitelement 32 überströmende Luftströmung LS an die konvex ausgebildete Seitenfläche 33 an und wird im Wesentlichen in horizontaler Richtung umgelenkt. In einem vierten, unterhalb des Luftleitelementes 32 liegenden Bereich D legt sich die Luftströmung LS an die der jeweiligen Siebunterseite abgewandte Seitenfläche 33 an das Profil des Luftleitelementes 32 an, und folgt dem Profil der Seitenfläche 33 in einer etwa horizontalen Richtung. Aufgrund der Neigung der Hauptachse HA des Luftleitelementes 32 und der ebenfalls konvexen Profilierung dieser der Siebunterseite abgewandten Seitenfläche 33 stellt sich beim Überströmen der Seitenfläche 33 im vierten Bereich D eine in vertikale Richtung auf das jeweilige Obersieb 14 sowie Untersieb 15 gerichtete anteilige Luftströmung LS hinter dem Luftleitelement 32 ein. In einem fünften Bereich E des Luftleitelementes 32, dem unteren Abströmbereich, treffen die Anteile der Luftströme LS aus dem zweiten Bereich B und dem vierten Bereich D aufeinander, welche sich aufgrund der besonderen Form des Leitelementes 32 teilweise vereinen. Hinter der im als Abströmbereich bezeichneten Bereich E befindlichen Stirnfläche 34 des Luftleitelementes 32 kommt es wegen des Fehlens von scharfkantigen oder spitz zulaufenden Abschnitten zu keiner beziehungsweise nur zu einer geringen Ablösung der Luftströmung LS hinter dem Luftleitelement 32. Durch die Aufteilung der Luftströmung LS wird eine Durchströmung aller oberhalb der Luftleitelemente 32 befindlichen Lamellen von Obersieb 14 und Untersieb 15 erreicht, wobei der das Luftleitelement 32 untenseitig umströmende Anteil der Luftströmung LS in einem in Gutaustragrichtung weiter hinten liegenden Bereich auf das jeweilige Siebe 14, 15 trifft, als der das Luftleitelement 32 obenseitig umströmende Anteil der Luftströmung LS. Die jeweilige Anordnung wenigstens eines Luftleitelementes 32 im Bereich der hinteren zwei Drittel von Obersieb 14 und Untersieb 15 trägt dazu bei, durch eine gerichtete Ablenkung des Luftstromes die Durchströmung des jeweiligen Siebs 14, 15 zu verbessern, so dass die Wirbelschichtphase in Gutaustragrichtung länger aufrechterhalten bleibt.

Die Siebverlängerung 31 dient dazu, die Effizienz der Reinigungseinrichtung 4 aufgrund der in Austragrichtung verlängerten Wirbelschichtphase zu erhöhen. Hierbei kann die Siebverlängerung 31 als ein zusätzlich montierbarer Siebabschnitt ausgeführt sein, der an dem Ende des Obersiebes angeordnet werden kann. Alternativ kann im Sinne einer Nachrüstlösung ein verbautes Obersieb 14 gegen ein längeres ausgetauscht werden, um die Vorteile der Luftleitelemente 32 voll ausschöpfen zu können.

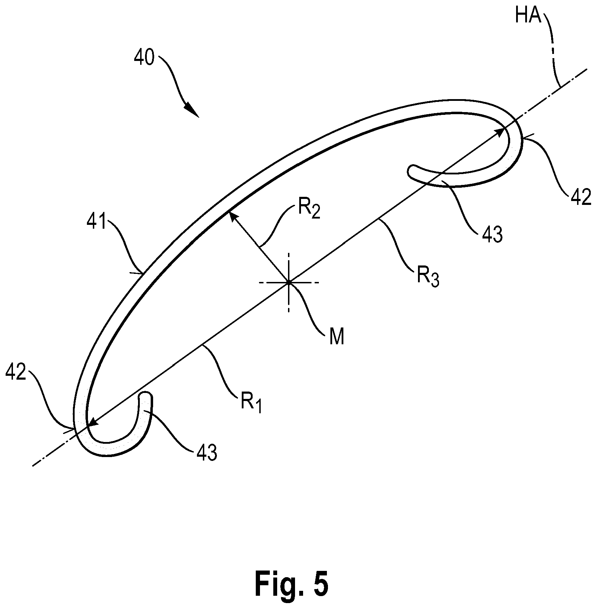

Denkbar ist auch die Verwendung von Luftleitelementen 40 mit einem abschnittsweise offenen Profil, wie es beispielhaft in Fig. 5 dargestellt ist. Das Luftleitelement 40 umfasst ebenfalls zwei Stirnflächen 42, welche jedoch nun durch eine Seitenfläche 41 miteinander verbunden sind. Die gegenüberliegende Seite ist offen ausgeführt. Die Stirnflächen 42 münden auf ihrer der Seitenfläche 41 abgewandten in Endbereiche 43, welche eine abschnittsweise nach innen gewölbte Krümmung aufweisen. Die Stirnflächen 42 beziehungsweise die Seitenfläche 41 weisen bezogen auf den Querschnittsmittelpunkt M des Luftleitelementes 40 unterschiedliche Krümmungsradien R₁, R₂, R₃ auf, wobei die Krümmungsradien R₁, R₃ der Stirnflächen 34 größer sind, als der Krümmungsradius R₂ der einen Seitenfläche 42.

**Bezugszeichenliste**

| | | | |
|---|---|---|---|
| 1 | Mähdrescher | 31 | Siebverlängerung |
| 2 | Schneidwerk | 32 | Luftleitelement |
| 3 | Dreschorgane | 33 | Seitenfläche |
| 4 | Reinigungseinrichtung | 34 | Stirnfläche |
| 5 | Korntank | 35 | Aktorik |
| 6 | Fahrerkabine | | |
| 7 | Verteilvorrichtung | 40 | Luftleitelement |
| 8 | Erntegut | 41 | Seitenfläche |
| 9 | Schrägförderorgan | 42 | Stirnfläche |
| 10 | Dreschtrommel | 43 | Endbereich von 42 |
| 11 | Dreschkorb | | |
| 12 | Vorbereitungsboden | FR | Förderrichtung |
| 13 | Reinigungsgebläse | HA | Hauptachse |
| 14 | Obersieb | LS | Luftströmung |
| 15 | Untersieb | M | Querschnittsmittelpunkt |
| 16 | Wendetrommel | R₁ | Krümmungsradius |
| 17 | Axialrotor | R₂ | Krümmungsradius |
| 18 | Boden | R₃ | Krümmungsradius |
| 19 | Sieb | | |
| 20 | Schnecke | A | Erster Bereich |
| 21 | Rücklaufboden | B | Zweiter Bereich |
| 22 | Schneckenfördereinrichtung | C | Dritter Bereich |
| 23 | Kornelevator | D | Vierter Bereich |
| 24 | Rückwärtiges Ende von 17 | E | Fünfter Bereich |
| 25 | Überkehrelevator | | |
| 26 | Häcksler | | |
| 27 | Steuerungseinrichtung | | |
| 28 | Erster Kanalabschnitt | | |
| 29 | Signal- und Steuerleitung | | |
| 30 | Zweiter Kanalabschnitt | | |

## Patentansprüche

1. Reinigungseinrichtung (4) für einen Mähdrescher (1), umfassend wenigstens ein Gebläse (13), einen oszillierend angetriebenen Siebrahmen, der zumindest ein Obersieb (14) und ein Untersieb (15) aufweist, die beabstandet zueinander in dem Siebrahmen angeordnet sind, sowie zumindest einen Kanalabschnitt (28), der einen von dem Gebläse bereitgestellten Luftstrom von schräg unten in Richtung auf die Unterseite des Obersiebes und des Untersiebes lenkt, wobei unterhalb des Untersiebes (15) und des Obersiebes (14) jeweils zumindest ein Luftleitelement (32, 40) angeordnet ist, welches einander gegenüberliegende, von spitz zulaufenden Bereichen freie Stirnflächen (34, 42) und zumindest eine diese miteinander verbindende Seitenfläche (33, 41) aufweist, die bezogen auf den Querschnittsmittelpunkt (M) des Luftleitelementes (32, 40) unterschiedliche Krümmungsradien (R1, R2, R3) aufweisen, wobei die Krümmungsradien (R1, R3) der Stirnflächen (34, 42) größer sind, als der Krümmungsradius (R2) der zumindest einen Seitenfläche (33, 41), wobei eine Hauptachse (HA) des jeweiligen Luftleitelementes (32, 40) eine Neigung zur jeweiligen Siebebene von Ober- und Untersieb (14, 15) aufweist, **dadurch gekennzeichnet, dass** die Neigung der Hauptachse (HA) des jeweiligen Luftleitelementes (32, 40) einstellbar ist.

2. Reinigungseinrichtung (4) nach Anspruch 1, **dadurch gekennzeichnet, dass** zumindest die Länge des Obersiebes (14) in Abhängigkeit von der Anzahl an darunter angeordneten Leitelementen (32, 40) verlängerbar ist.

3. Reinigungseinrichtung (4) nach einem der Ansprüche 1 oder 2, **dadurch gekennzeichnet, dass** das jeweilige Luftleitelement (32, 40) einen im Wesentlichen ellipsenförmigen, von spitz zulaufenden Bereichen freien Querschnitt aufweist.

4. Reinigungseinrichtung (4) nach einem der Ansprüche 1 bis 3, **dadurch gekennzeichnet, dass** unter dem Untersieb (15) und dem Obersieb (14) jeweils wenigstens zwei Luftleitelemente (32, 40) angeordnet sind, die in Gutaustragrichtung gesehen versetzt zueinander angeordnet sind.

5. Reinigungseinrichtung (4) nach einem der Ansprüche 1 bis 4, **dadurch gekennzeichnet, dass** die Luftleitelemente (32, 40) in einer zur jeweiligen Siebebene parallelen Ebene angeordnet sind.

6. Reinigungseinrichtung (4) nach einem der Ansprüche 4 oder 5, **dadurch gekennzeichnet, dass** die Anordnung der Luftleitelemente (32, 40) zueinander derart gewählt ist, dass gedachte Verbindungslinien, welche die Längsachsen der Luftleitelemente (32, 40) miteinander verbinden, ein Parallelogramm aufspannen.

7. Reinigungseinrichtung (4) nach einem der Ansprüche 1 bis 6, **dadurch gekennzeichnet, dass** der jeweilige Abstand der Luftleitelemente (32, 40) zu dem Untersieb (15) und/oder dem Obersieb (14) in vertikaler Richtung variierbar ist.

8. Reinigungseinrichtung (4) nach einem der Ansprüche 1 bis 7, **dadurch gekennzeichnet, dass** der jeweilige Abstand der Luftleitelemente (32, 40) zu dem Untersieb (15) und/oder dem Obersieb (14) in horizontaler Richtung variierbar ist.

9. Reinigungseinrichtung (4) nach einem der Ansprüche 1 bis 8, **dadurch gekennzeichnet, dass** die Luftleitelemente (32, 40) als Hohlprofile ausgeführt sind.

10. Reinigungseinrichtung (4) nach einem der Ansprüche 1 bis 9, **dadurch gekennzeichnet, dass** die Luftleitelemente (32, 40) auf ihrer dem Untersieb (15) und/oder dem Obersieb (14) abgewandten Seite abschnittsweise offen ausgeführt sind.

11. Mähdrescher (1) mit einer Reinigungseinrichtung (4) nach einem der Ansprüche 1-10, **dadurch gekennzeichnet, dass** eine Steuerungseinrichtung (27) zur Ansteuerung einer Aktorik (35) zur Verstellung der Leitelemente (32, 40) vorgesehen ist.

## Claims

1. A cleaning device (4) for a combine harvester (1) comprising at least one fan (13), an oscillatingly driven sieve frame which has at least an upper sieve (14) and a lower sieve (15) which are arranged in mutually spaced relationship in the sieve frame, and at least one passage portion (28) which directs an air flow produced by the fan from below inclinedly in the direction of the underside of the upper sieve and the lower sieve, wherein arranged beneath the lower sieve (15) and the upper sieve (14) is at least one respective air guide element (32, 40) which has mutually opposite end faces (34, 42) free from regions tapering to a point and at least one side surface (33, 41) connecting said end faces together, which are of different radii of curvature (R1, R2, R3) in relation to the cross-sectional centre point (M) of the air guide element (32, 40), wherein the radii of curvature (R1, R3) of the end faces (34, 42) are greater than the radius of curvature (R2) of the at least one side surface (33, 41), wherein a main axis (HA) of the respective air guide element (32, 40) has an inclination relative to the respective sieve plane of the upper and lower sieves (14, 15), **characterised in that** the inclination of the main axis (HA) of the respective air guide element (32, 40) is adjustable.

2. A cleaning device (4) according to claim 1 **characterised in that** at least the length of the upper sieve (14) can be increased in dependence on the number of guide elements (32, 40) arranged below it.

3. A cleaning device (4) according to one of claims 1 and 2 **characterised in that** the respective air guide element (32, 40) has a substantially elliptical cross-section free from regions tapering to a point.

4. A cleaning device (4) according to one of claims 1 to 3 **characterised in that** arranged below the lower sieve (15) and the upper sieve (14) are at least two respective air guide elements (32, 40) which as viewed in the material discharge direction are arranged in mutually displaced relationship.

5. A cleaning device (4) according to one of claims 1 to 4 **characterised in that** the air guide elements (32, 40) are arranged in a plane parallel to the respective sieve plane.

6. A cleaning device (4) according to one of claims 4 or 5 **characterised in that** the arrangement of the air guide elements (32, 40) relative to each other is so selected that notional connecting lines connecting the longitudinal axes of the air guide elements (32, 40) together define a parallelogram.

7. A cleaning device (4) according to one of claims 1 to 6 **characterised in that** the respective spacing of the air guide elements (32, 40) relative to the lower sieve (15) and/or the upper sieve (14) is variable in a vertical direction.

8. A cleaning device (4) according to one of claims 1 to 7 **characterised in that** the respective spacing of the air guide elements (32, 40) relative to the lower sieve (15) and/or the upper sieve (14) is variable in a horizontal direction.

9. A cleaning device (4) according to one of claims 1 to 8 **characterised in that** the air guide elements (32, 40) are in the form of hollow profile members.

10. A cleaning device (4) according to one of claims 1 to 9 **characterised in that** the air guide elements (32, 40) are of a portion-wise open configuration on their side facing away from the lower sieve (15) and/or the upper sieve (14).

11. A combine harvester (1) comprising a cleaning device according to one of claims 1 to 10 **characterised in that** there is provided a control device (27) for controlling an actuator means (35) for displacement of the guide elements (32, 40).

## Revendications

1. Équipement de nettoyage (4) pour une moissonneuse-batteuse (1), comprenant au moins un ventilateur (13), un cadre de grille à entraînement oscillant qui comporte au moins un tamis supérieur (14) et un tamis inférieur (15), lesquels sont disposés à distance l'un de l'autre dans le cadre de grille, ainsi qu'au moins une portion de canal (28) qui dirige un courant d'air, fourni par le ventilateur, en biais à partir d'en bas en direction de la sous-face du tamis supérieur et du tamis inférieur, au-dessous du tamis inférieur (15) et du tamis supérieur (14) étant disposé respectivement un élément de guidage d'air (32, 40) qui comporte des surfaces frontales (34, 42) en vis-à-vis, dépourvues de zones se terminant en pointe, et au moins une surface latérale (33, 41) qui les relie entre elles et qui, par rapport au centre de section transversale (M) de l'élément de guidage d'air (32, 40), présente divers rayons de courbure (R1, R2, R3), les rayons de courbure (R1, R3) des surfaces frontales (34, 42) étant supérieurs au rayon de courbure (R2) de la au moins une surface latérale (33, 41), un axe principal (HA) de l'élément de guidage d'air respectif (32, 40) présentant une inclinaison par rapport au plan de tamisage des tamis supérieur et inférieur (14, 15), **caractérisé en ce que** l'inclinaison de l'axe principal (HA) de l'élément de guidage d'air respectif (32, 40) étant réglable.

2. Équipement de nettoyage (4) selon la revendication 1, **caractérisé en ce qu'**au moins la longueur du tamis supérieur (14) est extensible en fonction du nombre d'éléments de guidage (32, 40) disposés au-dessous.

3. Équipement de nettoyage (4) selon une des revendications 1 ou 2, **caractérisé en ce que** l'élément de guidage d'air respectif (32, 40) présente une section transversale sensiblement ellipsoïde, dépourvue de zones terminées en pointe.

4. Équipement de nettoyage (4) selon une des revendications 1 à 3, **caractérisé en ce que** sous le tamis inférieur (15) et le tamis supérieur (14) sont disposés respectivement au moins deux éléments de guidage d'air (32, 40) qui, vus dans la direction de sortie de produit, sont disposés de manière décalée l'un par rapport à l'autre.

5. Équipement de nettoyage (4) selon une des revendications 1 à 4, **caractérisé en ce que** les éléments de guidage d'air (32, 40) sont disposés dans un plan parallèle au plan de tamisage respectif.

6. Équipement de nettoyage (4) selon une des revendications 4 ou 5, **caractérisé en ce que** l'agencement des éléments de guidage d'air (32, 40) l'un par rapport à l'autre est choisi de façon que des lignes de jonction imaginaires qui relient entre eux les axes longitudinaux des éléments de guidage d'air (32, 40) définissent un parallélogramme.

7. Équipement de nettoyage (4) selon une des revendications 1 à 6, **caractérisé en ce que** la distance respective des éléments de guidage d'air (32, 40) au tamis inférieur (15) et/ou au tamis supérieur (14) est variable dans la direction verticale.

8. Équipement de nettoyage (4) selon une des revendications 1 à 7, **caractérisé en ce que** la distance respective des éléments de guidage d'air (32, 40) au tamis inférieur (15) et/ou au tamis supérieur (14) est variable dans la direction horizontale.

9. Équipement de nettoyage (4) selon une des revendications 1 à 9, **caractérisé en ce que** les éléments de guidage d'air (32, 40) sont conformés en profilés creux.

10. Équipement de nettoyage (4) selon une des revendications 1 à 9, **caractérisé en ce que** les éléments de guidage d'air (32, 40) sont ouverts par portions sur leur côté situé à l'opposé du tamis inférieur (15) et/ou du tamis supérieur (14).

11. Moissonneuse-batteuse (1) comprenant un équipement de nettoyage (4) selon une des revendications 1-10, **caractérisée en ce qu'**un équipement de commande (27) est prévu pour commander un ensemble actionneur (35) servant à régler les éléments de guidage (32, 40).
